# FASCICULE DE BREVET EUROPEEN

(11) **EP 3 545 188 B1**
(45) Date de publication et mention de la délivrance du brevet: **06.01.2021**
(21) Numéro de dépôt: 17811653.9
(22) Date de dépôt: 22.11.2017
(51) Int. Cl.: F03B 7/00

(54) **DISPOSITIF DE VIS D'ARCHIMÈDE POUR CENTRALE HYDRAULIQUE, ET SON PROCÉDÉ DE FABRICATION**
ARCHIMEDISCHE SCHRAUBE FÜR WASSERKRAFTWERK UND DEREN FERTIGUNGSVERFAHREN
ARCHIMEDES' SCREW FOR HYDROPOWER GENERATION AND ITS MANUFACTURING PROCESS

(30) Priorité: 25.11.2016 FR 1661525
(43) Date de publication de la demande: 02.10.2019
(73) Titulaire: Helliogreen Technologies, 08000 Charleville Mézières (FR)
(72) Inventeur: MAQUIN, Daniel, 51000 Chalons en Champagne (FR); MIGNOLET, Renaud, 08460 Signy L'Abbaye (FR)
(74) Mandataire: Cabinet Bleger-Rhein-Poupon
(86) Numéro de dépôt international: PCT/FR2017/053213
(87) Numéro de publication internationale: WO 2018/096268

(56) Documents cités:
- EP-A2- 2 369 168
- DE-B3-102012 103 127
- FR-A1- 2 981 130
- US-A1- 2014 265 337
- US-B1- 7 633 174

## Description

La présente invention a pour objet un dispositif de vis d'Archimède pour centrale hydraulique ainsi que son procédé de fabrication.

On connaît l'utilisation d'une vis d'Archimède comme turbine, afin de produire de l'énergie dans des petites centrales hydroélectriques. La vis est alors positionnée inclinée dans un auget ou dans un tube, disposée au niveau d'une chute d'eau, l'eau faisant par gravité tourner la vis dans ledit auget ou ledit tube.

Une telle vis présente plusieurs inconvénients. Le premier consiste en ce qu'il existe une fuite entre les filets de la vis et l'auget, en sorte que cela affecte le rendement.

Un autre inconvénient est que pour être ichtyocompatible, c'est-à-dire éviter que les anguilles et poissons ne soient blessés ou tués en étant pris entre la vis et l'auget ou le tube, la vitesse de rotation de la vis doit être limitée, ce qui limite le débit et oblige à augmenter la taille donc le poids de la vis.

Pour résoudre ce problème, il a déjà été proposé de solidariser les filets de la vis au tube qui la contient, en sorte que ce soit l'ensemble qui tourne, et qu'il n'y ait plus de différence de vitesse entre la vis et le tube.

Il est ainsi décrit dans le document DE 10 2012 103 127, un dispositif comprenant deux tubes concentriques, solidarisés l'un à l'autre par l'intermédiaire d'une hélice disposée hélicoïdalement entre les deux tubes, le tube interne étant monté sur un arbre qui en autorise la rotation, en étant maintenu par ses extrémités entre un palier haut et palier bas. Si cette vis est ichtyocompatible, elle présente tout de même des inconvénients, outre d'être de fabrication peu évidente, elle doit être de conception robuste pour pouvoir être portée par l'arbre, et est donc relativement lourde, ce qui affecte son rendement.

Pour pallier cet inconvénient, on connaît, par les documents EP 2 369 168 et FR 2 981 130, un dispositif de vis d'Archimède pour centrale hydraulique, comprenant deux tubes concentriques, solidarisés l'un à l'autre par une hélice disposée hélicoïdalement entre les deux tubes, et positionnée inclinée en dessous d'une chute d'eau, l'ensemble étant porté d'une part dans sa partie supérieure par un palier dans lequel peut tourillonner l'extrémité du tube intérieur, et d'autre part dans sa partie inférieure, au travers d'un berceau dans lequel repose le tube extérieur.

Ces dispositifs de vis d'Archimède ne présentent toutefois pas un rendement optimal.

La présente invention a pour but de proposer un dispositif de vis d'Archimède pour centrale hydraulique qui, de par sa conception, présente un rendement supérieur à celui de vis d'Archimède classiques.

Le dispositif de vis d'Archimède pour centrale hydraulique selon l'invention, comporte un ensemble comprenant deux tubes concentriques, solidarisés l'un à l'autre par une hélice disposée hélicoïdalement entre lesdits deux tubes, et positionnée inclinée en dessous d'une chute d'eau, l'eau en passant par gravité entre les deux tubes, faisant tourner ledit ensemble, ledit ensemble étant porté d'une part dans sa partie supérieure par un palier dans lequel peut tourillonner l'extrémité du tube intérieur, et d'autre part dans sa partie inférieure, au travers d'un berceau dans lequel repose le tube extérieur, et il se caractérise en ce que l'hélice hélicoïdale de la vis est constituée de deux filets, l'un radial et l'autre oblique par rapport à l'axe de la vis.

Le doublement par un filet supplémentaire permet d'augmenter le volume d'eau transporté, donc le débit ou pour une même capacité de débit l'encombrement de la vis est réduit et son poids est réduit.

La vis ayant une capacité de volume et une capacité de vitesse de rotation plus élevées, elle est pour un débit donné, plus petite en diamètre extérieur donc moins encombrante et plus légère qu'une vis classique.

Selon une autre caractéristique additionnelle du dispositif de vis selon l'invention, la vis comporte plusieurs hélices hélicoïdales.

Selon une autre caractéristique de la vis selon l'invention, le second filet, oblique par rapport à l'axe de la vis, s'étend obliquement dans l'espace compris dans une spire, entre la jonction du filet radial avec le tube intérieur, et la jonction du filet radial avec le tube extérieur.

Dans une section axiale, l'angle d'inclinaison du filet oblique dans le partie supérieure de la vis par rapport à l'axe de la vis est égal à l'angle d'inclinaison de la vis par rapport au plan horizontal, autrement dit, la section du filet oblique dans la partie supérieure de la vis est horizontal une fois la vis mise en position de fonctionnement.

La présente invention a également pour objet un procédé de fabrication du dispositif de vis selon l'invention, cette fabrication consistant à réaliser un empilage axial d'une multiplicité de tronçons annulaires monoblocs, aboutables et solidarisables, et comportant chacun une portion de tube intérieur, une portion de tube extérieur, et une portion d'au moins une hélice.

Les vis connues sont généralement monoblocs et posent des problèmes de transport à cause de leur taille et de leur poids. Les tronçons de l'invention étant beaucoup plus petits et légers et assemblés sur site ils nécessitent des moyens de transport et de manutention plus petits ce qui génère une économie lors de l'installation.

Selon un mode de mise en œuvre particulier du procédé de fabrication selon l'invention chaque tronçon est obtenu par une opération d'impression 3D de résine polymère chargée ou non.

Selon un autre mode de mise en œuvre particulier du procédé de fabrication selon l'invention, chaque tronçon est obtenu par une opération d'impression 3D de moules et noyaux en sable ainsi que des systèmes d'alimentation et de remplissage.

Selon un autre mode de mise en œuvre particulier du procédé de fabrication selon l'invention chaque tronçon est obtenu par une opération de moulage des moules hybrides composés de parties obtenues par un modèle qui est fusible, et des boites à noyaux permettant le remoulage desdits noyaux dans le moule.

Selon un autre mode de mise en œuvre particulier du procédé de fabrication selon l'invention chaque tronçon est obtenu par une opération de moulage, au travers de moules et de noyaux obtenus en combinant un moulage traditionnel et de l'impression 3D.

Les avantages et les caractéristiques du dispositif de vis d'Archimède selon l'invention, ressortiront plus clairement de la description qui suit et qui se rapporte au dessin annexé, lequel en représente un mode de réalisation non limitatif.

Dans le dessin annexé :
- la figure 1 représente une vue en perspective d'une vis d'Archimède pour centrale hydraulique selon l'invention.
- la figure 2 représente une vue schématique en coupe médiane longitudinale de la même vis.
- la figure 3 représente une vue en perspective du volume d'eau emporté entre deux filets d'une vis de l'état de la technique.
- la figure 4 représente une vue en perspective du volume d'eau emporté entre deux filets d'une vis selon l'invention.
- la figure 5 représente une vue schématique en coupe médiane longitudinale d'une partie de la même vis.
- la figure 6 représente une vue en perspective d'un élément de fabrication de la même vis.

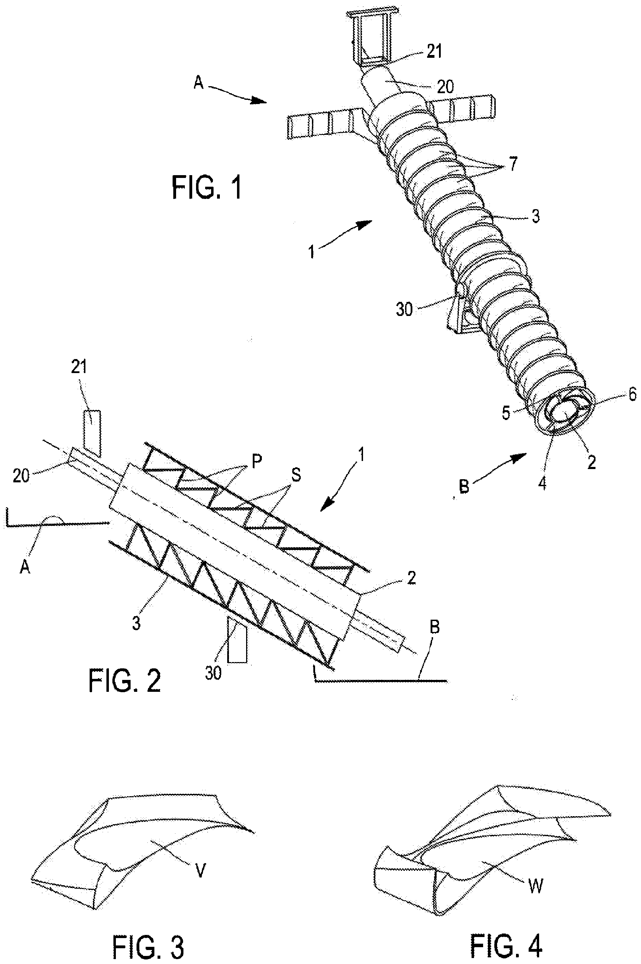

En référence aux figures 1 et 2, on peut voir un dispositif de vis d'Archimède 1 pour centrale hydraulique selon l'invention, disposée au niveau d'une chute d'eau entre un point amont A et un point aval B.

Cette vis d'Archimède 1 comporte deux tubes concentriques, un tube intérieur 2 et un tube extérieur 3, entre lesquels s'étendent hélicoïdalement, dans le mode de réalisation représenté, trois hélices 4, 5 et 6, solidaires fixement chacun à la fois du tube intérieur 2 et du tube extérieur 3.

Chacune des hélices 4, 5 et 6, présente un filet double, c'est-à-dire à deux sections, comme cela sera vu plus en détail plus loin.

La vis 1 est portée d'une part en amont par l'intermédiaire de l'extrémité 20 du tube intérieur 2 par l'intermédiaire d'un palier 21, et d'autre part au travers d'un berceau 30 sur lequel repose, au niveau de sa moitié inférieure, le tube extérieur 3.

Sur la figure 2, on peut voir que chaque hélice est constituée de deux sections P et S, à savoir une première section P qui serpente hélicoïdalement et radialement entre les tubes 2 et 3, et une seconde section S qui serpente également hélicoïdalement entre les tubes 2 et 3, mais non radialement, pour s'étendre entre la ligne de jonction de la première section P avec le tube extérieur 3, et la ligne de jonction de la première section P voisine avec le tube intérieur 2.

En référence maintenant à la figure 3, on peut voir le volume d'eau maximum V contenu entre deux filets d'une vis de type classique, tandis que sur la figure 4 le volume d'eau maximum W contenu entre deux filets d'une vis 1 selon l'invention, lequel peut être supérieur de 25 à 33% selon la configuration retenue.

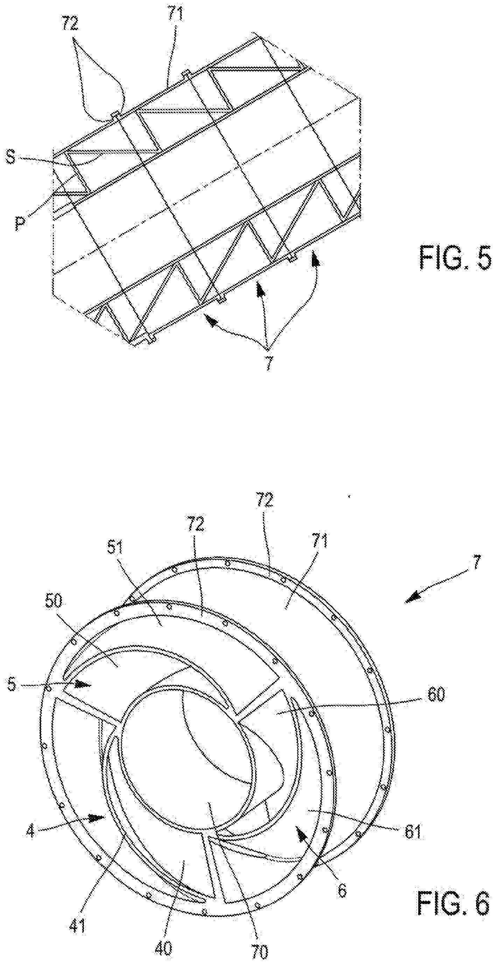

En référence encore à la figure 1, ainsi qu'à la figure 5, on peut voir que le dispositif de vis d'Archimède 1 selon l'invention est constitué de l'empilage axial d'une multiplicité de tronçons annulaires monoblocs 7, dont un est représenté sur la figure 6.

Sur cette figure 6, on peut voir qu'un tronçon 7 comporte d'une part un élément tubulaire interne 70 destiné à constituer avec les autres éléments tubulaires 70 des autres tronçons 7 et après solidarisation, le tube intérieur 2 ; d'autre part un élément tubulaire externe 71 destiné à constituer avec les autres éléments tubulaires 71 des autres tronçons 7 et après solidarisation, le tube extérieur 3 ; d'autre part encore des éléments internes, 40, 41, 50, 51, 60, 61, reliant l'élément tubulaire interne 70 et l'élément tubulaire externe 71, pour constituer avec ceux des autres tronçons 7, les hélices 4, 5 et 6.

Chacun des tronçons 7 comporte à chacune des extrémités de son élément tubulaire externe 71, une collerette extérieure 72 permettant après aboutement la solidarisation de deux tronçons 7 par boulonnage par l'extérieur.

On notera que les éléments externes 70 pourraient également comporter des collerettes internes, cela n'est toutefois pas nécessaire.

Les tronçons peuvent être fabriqués avec matériaux divers tels que, non limitativement, tous types de polymères ou matériaux composites contenant une charge métallique ou céramique, des alliages d'aluminium, des alliages ferreux.

D'autre part, les tronçons 7 peuvent être réalisés selon plusieurs modes de fabrication, à savoir :
- fabrication additive directe : impression 3D de résine polymère chargée ou non. Les méthodes employées font appel à du fil, de la résine et tous moyens de polymérisation et réticulation. Les tronçons de chaque vis sont ainsi fabriqués couche par couche pour obtenir un élément fini pouvant être assemblé par tout procédé de fixation et guidage. L'avantage de ce procédé est l'obtention directe des tronçons avec des géométries spécifiques à l'impression 3D (contre dépouille, etc...). Des fonctions particulières telles que des capteurs ou surfaces fonctionnels peuvent être ajoutées lors de l'impression de la pièce. Les éléments présentent avantageusement également un faible poids facilitant la manipulation et l'assemblage.
- fabrication additive indirecte : impression 3D des moules et noyaux en sable avec les systèmes d'alimentation et de remplissage compris. La fabrication des moules et noyaux par impression 3D permet de réaliser des formes sans dépouilles voir avec des contres dépouilles. Le matériau de base du moule peut être, non limitativement, de la silice, kerphalite, chromite ou olivine. Les moules et noyaux ainsi obtenus sont ensuite enduits d'une couche de protection assurant un état de surface favorable pour la pièce finie. La fabrication 3D des moules et noyau offre l'avantage de réaliser des vis d'Archimède sur mesure sans la fabrication d'outillages spécifiques.
- fabrication par moulage traditionnel : selon la géométrie et le nombre de vis à fabriquer, on utilise le moulage traditionnel pour obtenir le moule et les noyaux. On utilise donc des moules hybrides composés de parties obtenus par un modèle qui est fusible, tel que non limitativement du polystyrène, et des boites à noyaux permettant le remoulage des noyaux dans le moule.
- fabrication à partir de moulage hybride : les moules et noyaux sont obtenus en combinant le moulage traditionnel et l'impression 3D afin d'obtenir des parties dont la géométrie ne permet pas de démouler le modèle ou le noyau de son outillage.

## Revendications

1. Dispositif de vis d'Archimède pour centrale hydraulique, comportant un ensemble (1) comprenant deux tubes concentriques (2, 3) solidarisés l'un à l'autre par une hélice disposée hélicoïdalement entre lesdits deux tubes (2, 3)*, et positionnée inclinée en dessous d'une chute d'eau, l'eau en passant par gravité entre les deux tubes (2, 3), faisant tourner ledit ensemble, ledit ensemble (1) étant porté d'une part dans sa partie supérieure par un palier (21) dans lequel peut tourillonner l'extrémité (20) du tube intérieur (2), et d'autre part dans sa partie inférieure, au travers d'un berceau (30) dans lequel repose le tube extérieur (3), **caractérisé en ce que** l'hélice hélicoïdale (4, 5, 6) est constituée de deux filets (P, S), l'un (P) radial et l'autre (S) oblique par rapport à l'axe de la vis.

2. Dispositif de vis selon la revendication 1, **caractérisé en ce que** la vis comporte plusieurs hélices hélicoïdales (4, 5, 6) .

3. Dispositif de vis selon la revendication 1 ou la revendication 2, **caractérisé en ce que** le filet (S) oblique par rapport à l'axe de la vis, s'étend obliquement dans l'espace compris dans une spire, entre la jonction du filet radial (P) avec le tube intérieur (2), et la jonction du filet radial (P) avec le tube extérieur (2).

4. Procédé de fabrication d'un dispositif de vis selon l'une quelconque des revendications 1 à 3, **caractérisé en ce qu'**il consiste à empiler axialement une multiplicité de tronçons annulaires monoblocs (7), aboutables et solidarisables, et comportant chacun une portion de tube intérieur (2), une portion de tube extérieur (3), et une portion (40, 41, 50, 51, 60, 61) d'au moins une hélice (4, 5, 6).

5. Procédé de fabrication selon la revendication 4, **caractérisé en ce que** chaque tronçon (7) est obtenu par une opéra5ion d'impression 3D de résine polymère chargée ou non.

6. Procédé de fabrication selon la revendication 4, **caractérisé en ce que** chaque tronçon (7) est obtenu par une opération d'impression 3D de moules et noyaux en sable ainsi que les systèmes d'alimentation et de remplissage.

7. Procédé de fabrication selon la revendication 4, **caractérisé en ce que** chaque tronçon (7) est obtenu par une opération de moulage des moules hybrides composés de parties obtenues par un modèle qui est fusible, et des boites à noyaux permettant le remoulage desdits noyaux dans le moule.

8. Procédé de fabrication selon la revendication 4, **caractérisé en ce que** chaque tronçon (7) est obtenu par une opération de moulage, au travers de moules et de noyaux obtenus en combinant un moulage traditionnel et de l'impression 3D.

## Patentansprüche

1. Archimedische Schraubenvorrichtung für ein Hydraulikkraftwerk, umfassend eine Gesamtheit (1), die zwei konzentrische Rohre (2, 3) umfasst, die über eine Helix fest miteinander verbunden sind, die spiralförmig zwischen den besagten zwei Rohren (2, 3) angeordnet und geneigt unterhalb eines Wasserfalls positioniert ist, wobei das durch Schwerkraft zwischen den beiden Rohren (2, 3) fließende Wasser die besagte Gesamtheit drehen lässt, wobei die Gesamtheit (1) einerseits in ihrem oberen Teil von einem Lager (21), in dem das Ende (20) des Innenrohrs (2) drehen kann, und andererseits in seinem unteren Teil über eine Halterung (30), in der das Außenrohr (3) ruht, getragen ist, **dadurch gekennzeichnet, dass** die spiralförmige Helix (4, 5, 6) aus zwei Gewinden (P, S) besteht, von denen das eine (P) radial und das andere (S) schräg zur Achse der Schraube verläuft.

2. Schraubenvorrichtung nach Anspruch 1, **dadurch gekennzeichnet, dass** die Schraube mehrere spiralförmige Helices (4, 5, 6) umfasst.

3. Schraubenvorrichtung nach Anspruch 1 oder Anspruch 2, **dadurch gekennzeichnet, dass** sich das Gewinde (S) schräg zur Achse der Schraube schräg in dem Raum erstreckt, der in einer Windung zwischen der Verbindungsstelle des radialen Gewindes (P) mit dem Innenrohr (2) und der Verbindung des radialen Gewindes (P) mit dem Außenrohr (2) umfasst ist.

4. Verfahren zur Herstellung einer Schraubenvorrichtung nach irgendeinem der Ansprüche 1 bis 3, **dadurch gekennzeichnet, dass** es darin besteht, eine Vielzahl von einteiligen Ringabschnitten (7) axial zu stapeln, die aneinander gefügt und fest miteinander verbunden werden können und jeweils einen Teil des Innenrohrs (2), einen Teil des Außenrohrs (3) und einen Teil (40, 41, 50, 51, 60, 61) von mindestens einer Helix (4, 5, 6) umfassen.

5. Herstellungsverfahren nach Anspruch 4, **dadurch gekennzeichnet, dass** jeder Abschnitt (7) durch einen 3D-Druckvorgang von beladenem oder nichtbeladenem Polymerharz erhalten wird.

6. Herstellungsverfahren nach Anspruch 4, **dadurch gekennzeichnet, dass** jeder Abschnitt (7) durch einen 3D-Druckvorgang von Formen und Sandkernen sowie den Zuführ- und Füllsystemen erhalten wird.

7. Herstellungsverfahren nach Anspruch 4, **dadurch gekennzeichnet, dass** jeder Abschnitt (7) durch einen Formvorgang von Hybridformen erhalten wird, die aus Teilen, die durch ein schmelzbares Modell erhalten worden sind, und aus Kernkästen, die das Umformen der Kerne in der Form erlauben, bestehen.

8. Herstellungsverfahren nach Anspruch 4, **dadurch gekennzeichnet, dass** jeder Abschnitt (7) durch einen Formvorgang über Formen und Kerne erhalten wird, die durch Kombinieren einer herkömmlichen Formung und 3D-Druck erhalten werden.

## Claims

1. Archimedes' screw device for a hydraulic power plant, including an assembly (1) comprising two concentric tubes (2, 3) made integral with each other by a helix arranged helically between said two tubes (2, 3), and positioned inclined below a waterfall, the water, by passing by gravity between the two tubes (2, 3), causing said assembly to rotate, said assembly (1) being carried on the one hand, in its upper portion, by a bearing (21), in which the end (20) of the inner tube (2) can journal, and on the other hand, in its lower portion, through a cradle (30), in which the outer tube (3) rests, wherein the helical helix (4, 5, 6) is formed of two threads (P, S), one (P) radial and the other one (S) oblique with respect to the axis of the screw.

2. Screw device according to claim 1, wherein the screw includes several helical helices (4, 5, 6).

3. Screw device according to claim 1 or claim 2, wherein the thread (S) oblique with respect to the axis of the screw extends obliquely in the space included in a coil, between the junction of the radial thread (P) with the inner tube (2) and the junction of the radial thread (P) with the outer tube (2).

4. Method for manufacturing a screw device according to any one of claims 1 to 3, wherein it consists in axially stacking a multiplicity of single-piece annular sections (7), which can be butt-jointed and made integral, and which each include an inner tube portion (2), an outer tube portion (3), and a portion (40, 41, 50, 51, 60, 61) of at least one helix (4, 5, 6).

5. Manufacturing method according to claim 4, wherein each section (7) is obtained by a 3D printing operation of loaded or not-loaded polymer resin.

6. Manufacturing method according to claim 4, wherein each section (7) is obtained by a 3D printing operation of molds and sand cores as well as the supply and filling systems.

7. Manufacturing method according to claim 4, wherein each section (7) is obtained by a molding operation of the hybrid molds comprised of parts obtained by a model, which is fusible, and core boxes permitting the re-molding of said cores in the mold.

8. Manufacturing method according to claim 4, wherein each section (7) is obtained by a molding operation, through molds and cores obtained by combining traditional molding and 3D printing.
